# EUROPEAN PATENT APPLICATION

(11) **EP 2 327 922 A1**
(43) Date of publication of application: **01.06.2011**
(21) Application number: 09425490.1
(22) Date of filing: 27.11.2009
(51) Int. Cl.: F17D 5/02, G01M 3/28, G10F 1/10

(54) **Measurement Unit, particularly for hydraulic ducts**

(71) Applicant: Blueco S.r.l., 40033 Casalecchio di Reno, (BO) (IT)
(72) Inventor: Lamberti, Alberto, 40137 BOLOGNA (IT); Guerrero, Massimo, 40317 BOLOGNA (IT)
(74) Representative: Modiano, Micaela Nadia

(57) **Abstract**

Measurement unit, particularly for hydraulic ducts, that comprises at least one main duct (2) that is provided with at least one intake section (2a) and at least one discharge section (2b) for a fluid.

The unit comprises: at least one main flowmeter (3), for measuring the value of the flow-rate along the main duct (2) within a first measurement range; at least one auxiliary flowmeter (4), for measuring the value of the flow-rate along an auxiliary duct (5) within a second measurement range; at least one flow control element (6), that is arranged along the main duct (2), and that is selectively operated to divert the flow from the main duct (2) to the auxiliary duct (5), which is arranged in parallel to the flow control element (6); at least one control and management unit that is operatively associated with the main flowmeter (3) and the auxiliary flowmeter (4) in order to acquire and elaborate, at a desired rate, the signal that corresponds to the detections of the main flowmeter (3) and the auxiliary flowmeter.(4).

## Description

The present invention relates to a measurement unit, particularly for hydraulic ducts.

Companies responsible for the public distribution of water need to check and measure the water flow that transits within the pipes of the aqueducts and of the other water distribution systems and that is destined to be used by various users (private or professional).

As is known, various types of flowmeters are frequently used for that purpose, and are installed in the pipe lines of the water system to meter the cubic meters of water that have passed: such flowmeters can be consulted periodically in order to calculate the cost of the consumption and the correct amount to charge the users for such consumption.

This solution, however, is not free from drawbacks.

The consumption reading typically takes place biquarterly but, sometimes, even annually (during invoicing periods), as it requires someone to be sent to the meter, which is located along the territory, to make the reading.

This does not allow for the early detection of any malfunctions in the flowmeters, which sometimes occur, causing their blockage and interruption of the metering at least until the moment of the planned check. The incorrect reading thus obtained, sometimes due to the fact that the blockage lasts for long periods of time and which therefore corresponds to huge deficits in cubic meters of water effectively consumed, obviously constitutes an intolerable damage to the company providing the service.

Further, as is known, the pipes and the other elements affected by the flow of the water are also inevitably subject to the risk of breakage and deterioration which could lead to leakage and blow-by loss even of a small amount.

The amount of water involved in such leakage and blow-by loss can provide a peak value that is considerably inferior to the quantity that typically flows through the ducts, according to the demand of the connected users, and, for that reason, it is difficult to be measured by the flowmeters normally used, which are proportioned for measuring the flow-rate of estimated consumption.

Although the values are rather low, such constant leaking (since undetected) produces significant deficits, in terms of balance, that are unacceptable for those who offer the service (as well as often causing infiltrations and sometimes considerable damage to infrastructure and buildings).

The aim of the present invention is to solve the problems described above, by providing a unit that is able to guarantee constant and correct measurement of the flow-rate of water that passes through the hydraulic ducts of interest.

Within this aim, an object of the invention is to provide a unit that is suitable for the detection and the measurement of the flow-rates that are caused by leakage and blow-by losses, even of a small quantity.

Another object of the invention is to provide a unit that is able to signal any malfunctions in its components simply and promptly.

Another object of the invention is to provide a unit that can be used as an ordinary consumption meter for the users located downstream with a. telereading service.

Another object of the invention is to provide a unit that is highly reliable in use.

Another object of the invention is to provide a unit that is easy to install in any water system, even in already existing ones.

Another object of the invention is to provide a unit that can be easily obtained with elements and materials that are easily found on the market.

Another object of the invention is to provide a unit that is economical and safe to use.

This aim and these and other objects that will become better apparent hereinafter, are achieved by a measurement unit, particularly for hydraulic ducts, comprising at least one main duct that has at least one intake section and at least one discharge section for a fluid, characterized in that it comprises: at least one main flowmeter, for measuring the value of the flow-rate along said main duct within a first measurement range; at least one auxiliary flowmeter, for measuring the value of the flow-rate along an auxiliary duct within a second measurement range; at least one flow control element, that is arranged along said main duct, and can be selectively operated to divert the flow from said main duct to said auxiliary duct, which is arranged in parallel to said flow control element; at least one control and management unit that is functionally associated with said main flowmeter and said auxiliary flowmeter in order to acquire and process, at a desired rate, the signal that corresponds to the detections of data provided by said main flowmeter and said auxiliary flowmeter.

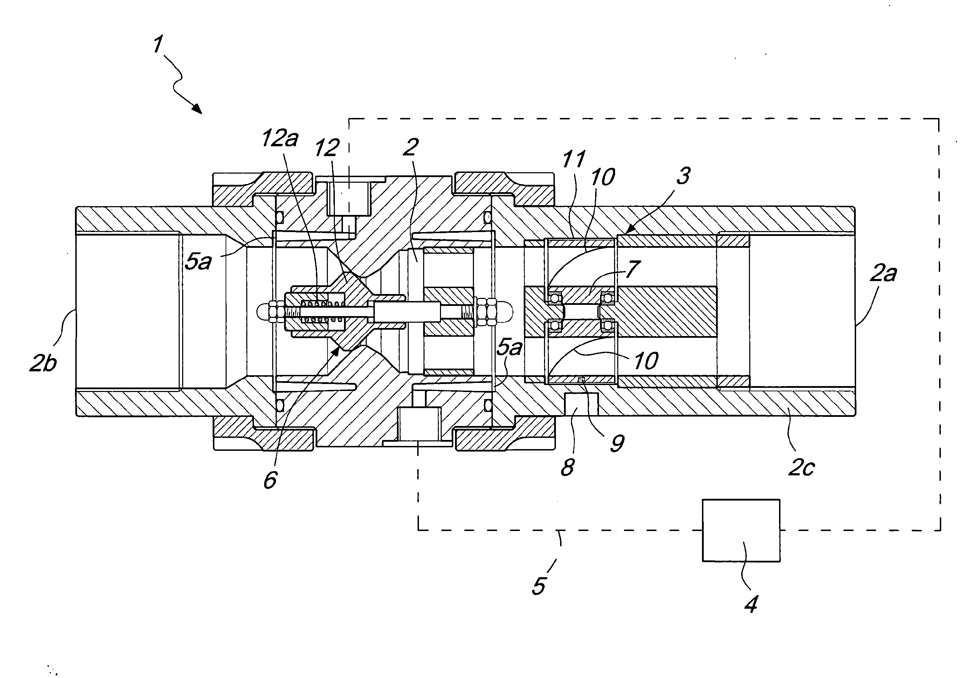

Further characteristics and advantages of the present invention will become better apparent from the following detailed description of a preferred but not exclusive embodiment of the unit according to the invention, illustrated by way of a non-limitative example in the accompanying drawings, wherein the sole Figure shows the measurement unit according to the invention in a cross-sectional axial view.

With reference to the figure, a measurement unit according to the invention, generally designated by the reference numeral 1, is adapted to be installed in various types of hydraulic ducts, and can, for example, be usefully installed in already existing water system, in order to take advantage of its numerous characteristics, which will be described hereinafter, for measuring and monitoring the fluids distributed to the users.

The unit 1 comprises at least one main duct 2 that has at least one intake section 2a and at least one discharge section 2b for a fluid. It should be specified that in the preferred application of the present invention, the fluid is substantially water and so the following discussion of the invention will mostly refer to water; however, the possibility of using the unit 1 for checking the ducts in which different types of fluids pass should not be excluded, which is within the scope of the appended claims.

The unit 1 can be installed in the ducts of the water systems that provide water to private and industrial users and, as will be illustrated, it allows to measure and monitor the water flow and consumption in an innovative way, at the same time guaranteeing that an alarm signal be forwarded in case the components of the unit 1 break and/or there are leaks in the system.

It should be specified that the main duct 2 can thus be constituted by an already existing pipe, that can be, for example, located upstream one or more users for whom the company providing the service wants to know the consumption: in that case, the other components and elements of the unit 1 can be installed directly onto the pipe (or pipes) chosen to be monitored. The components of the unit 1 that act outside the main duct 2 must therefore be installed externally to the pipe and so, when the unit is installed, work must be done on the walls, the infrastructure and any other structural elements in which such pipe is inserted.

Vice-versa, a preferred embodiment provides for the use of the units 1 in which also the main duct 2 and all the other components necessary make up a set that can be installed directly in series on a pre-existing pipe (or optionally inside the pipe): this solution allows to reduce both the work of installation to a minimum, since it does not even minimally impact the already existing infrastructures, and the over-all amount of space occupation, since the entire set is dimensionally and structurally comparable to part of the pipe, as it becomes part of it.

According to the invention, the measurement unit 1 comprises at least one main flowmeter 3 that is able to measure, along the main duct 2, the flow-rate within a first measurement range.

Moreover, the unit 1 comprises at least one auxiliary flowmeter 4, to measure the flow-rate within a second measurement range and along an auxiliary duct 5.

There is also a flow control element 6 that is arranged along the main duct 2 and that is selectively operated to divert the flow from the main duct 2 to the auxiliary duct 5, which is arranged in parallel to the flow control element 6.

Finally, the unit 1 comprises a control and management unit that is functionally associated with the main flowmeter 3 and the auxiliary flowmeter 4, in order to acquire and elaborate, as often as desired, the signal corresponding to the detections of such flowmeters.

According to an embodiment of practical interest, which is a preferred but not exclusive application of the invention, the main flowmeter 3 comprises a rotor 7 that can rotate about a rotation axis arranged along the direction in which the fluid flows.

When the fluid passes through the main duct 2, it makes the rotor 7 rotate and it is thus possible to determine the amount of fluid circulating by counting the number of rotations of the rotor 7 about its rotation axis, a number that is directly correlated to the amount of fluid. The calculation can be performed, for example, through a sensor 8 that is arranged contiguously to the rotor 7 (for example, located in a slot suitably provided along the walls 2c of the main duct 2).

In particular, according to a possible embodiment, the sensor 8 is a proximity sensor of the inductive type, suitable for detecting the passes, through a pre-determined measurement region, of at least one magnet 9 located at an end portion of at least one vane 10 of the rotor 7. According to this embodiment, the sensor 8 is thus able to count the number of passes of the magnet 9, which correspond to the number of turns made by the rotor 7.

Usefully, the main flowmeter 3 comprises an outer ring 11 that is rigidly coupled to the free ends of the vanes 10 of the rotor 7. The rotor 7 and the outer ring 11 can be made with one single step of injection molding and can be made of thermoplastic material.

The outer ring 11 has radial dimensions that substantially match those of the main duct 2, from which it is substantially separated by a thin layer of fluid (at the circulation of water in the pipes), to guarantee that the alignment of the rotor 7 is maintained with respect to the main duct 2 during rotation and at the same time to confer the necessary shape stability of the vanes 10 (that, without the outer ring 11, could become deformed over time due to the constant action of the fluid that makes them rotate).

With reference to the preferred embodiment, it should be clarified that vanes 10 whose longitudinal section is bent should be used, as they are more appropriate to overcome the initial friction, when such vanes are hit by the fluid, due to the presence of the fluid.

Thanks to the presence of the flow control element 6, which, as will be better illustrated hereinafter, is able to automatically deviate the flow of fluid towards the auxiliary duct 5 when the flow is low, the second measurement range of the auxiliary flowmeter 4 is sized for flow-rates reading substantially smaller than those of the main flowmeter 3.

It is thus possible to measure with precision by way of the main flowmeter 3 (sized to read elevated flow-rates) the flow deriving from the demand of the users located downstream and that cross the main duct 2, while thanks to the auxiliary flowmeter 4 (suitable for reading low flow-rates) the unit 1 is able to detect and measure with precision flows that are greatly reduced due to leaks and blow-by losses localized at any point throughout the system, that are automatically deviated towards the auxiliary duct 5.

Moreover, the first measurement range and the second measurement range have an interval of overlap: in this way the values of flow-rate within the interval of overlap are detectable with precision by both the main flowmeter 3 and the auxiliary flowmeter 4, that is arranged (as shown in the Figure) substantially in series at the portion of the main duct 2 comprising the main flowmeter 3.

When the flow control element 6 is actuated, and closes the main duct 2, the two measurement instruments are substantially arranged in series (the main flowmeter 3 is arranged upstream to the shutter 12, as shown in the Figure): when water passes with a flow-rate within the interval of overlap, it is possible to obtain an optimal reading of such flow from both measuring instruments.

Through a correct sizing of the elements, in fact, in correspondance to such flow-rates, the flow control element 6 is maintained in the closed configuration of the main duct 2 and deviates the flow towards the auxiliary duct 5, with a consequential duplicate reading.

For example, the first measurement range could be recomprised between an inferior limit value of 0.5 1/min and a superior limit value of 100 1/min, while the second measurement range could have an inferior limit value of 0.01 1/min and a superior limit value of 2 1/min: according to such an example (cited purely to illustrate a non-limitative application of the invention) the interval of overlap corresponds to the values of flow-rate comprised between 0.5 1/min and 11/min.

According to procedures that will be illustrated hereinafter, this allows the reciprocal monitoring of the main flowmeter 3 and the auxiliary flowmeter 4: a malfunctioning of either one, in fact, is promptly signaled by the reading provided by the other one, and vice versa.

It should be noted that the possibility of restoring to the auxiliary flowmeter 4 dedicated only to the reading of low flow-rates, and thus which does not require wide ranges of reading, allows to choose auxiliary flowmeters 4 that are substantially of any type and are of very low costs, whether they are of the commercial type or of the type suitably created for the unit 1.

Usefully, the flow control element 6 is substantially constituted by a valve comprising a shutter 12 which is normally arranged to close a passage port formed along the main duct 2. The shutter 12 is automatically movable in order to disengage the port, when a pre-determined value of difference in pressure between the intake section 2a and the discharge section 2b is exceeded, and vice versa.

Actually, the result is that up until a pre-determined value of flow-rate, the shutter 12 is maintained in the closed configuration of the main duct 2 and directs the flow towards the auxiliary duct 5 arranged parallel to the first duct. This allows to obtain the desired deviation of flow only for the low flow-rates (flow-rates that are read in series by the two measurement instruments, as has already been observed), corresponding to leaks in the water system.

The arrival of great quantities of water through the intake section 2a, according to the user's demand, determines a difference of pressure with respect to the discharge section 2b which in turn causes the automatic opening of the shutter 12, that is maintained in the open configuration, which allows the circulation of the flow along the main duct 2, as long as there are large masses of water that pass through the main duct 2.

In more detail, according to one possible embodiment, the shutter 12 can be maintained in the closed position for the passage port by a spring 12a that acts on it: until a pre-determined value of difference of pressure is reached, the elastic reaction of the spring 12a guarantees that the closed configuration is maintained.

Once the pre-determined value of pressure is exceeded, a force is applied to the shutter 12 such as to overcome the elastic reaction of the spring 12a and to cause the movement of the shutter 12 and the subsequent opening of the passage port.

Once the push of the flow is finished (or its value is below a pre-determined threshold) the elastic reaction of the spring 12a determines the resetting of the initial closed configuration.

However, the possibility of creating a valve in different ways or making it work in a different way (while still within the scope of the appended claims) should not be excluded, for example through the value of the flow-rate detected by the auxiliary flowmeter 4, or through an active check in order to obtain a more certain closure.

As described above, it seems clear that only low flow-rates should pass through the auxiliary duct 5; this usefully allows to limit the dimensions of the auxiliary duct 5 (and thus the entire space occupation of the unit 1). This is because it is not necessary to provide other calming sections nor upstream nor downstream of the auxiliary flowmeter 4 for turbulent components of the fluid in motion that could be present, since such calming section was arranged in the circular ring that, according to the preferred embodiment, constitutes substantially the auxiliary duct 5.

Even the main flowmeter 3 does not necessitate calming sections, since even if the turbulent components are present, they do not have any negative effect on the rotor 7 and the vanes 10, not compromising the correct measurement of the flow-rate.

Appropriately, in order to monitor the behavior of the flow-rate, the control and management unit comprises at least a first module for calculating at least one between the main indicator and the auxiliary indicator, which are representative of the behavior over time of the flow circulating in the main duct 2 and in the auxiliary duct 5 respectively.

In particular, according to a first application, the main indicator can be constituted by the consumption along the main duct 2 (that therefore allows to determine the amount that should be invoiced for the users downstream), which is obtainable by way of a total sum of the exact values of flow-rate detected by the main flowmeter 3.

The auxiliary indicator instead can be constituted by the minimum value of flow-rate detected in the auxiliary duct 5 (or the minimum value exceeded minus a small fraction of time).

Further, the control and management unit comprises a comparator of at least one between the main indicator and the auxiliary indicator with a respective pre-determined reference parameter. This allows for the evaluation of whether the behavior of the flow has any anomalies over time with respect to what is considered a standard behavior (described by the reference parameters), in order to promptly detect (and if necessary, intervene after an alarm signal) anomalies and deviations with respect to the normal behavior of flow circulating in the main duct 2 and in the auxiliary duct 5.

Therefore, to evaluate the correct working, and in particular the absence of leaks, the auxiliary indicator (minimum flow, as mentioned) can be compared over time with a reference parameter constituted by a threshold for considerable leaks (pre-determined): when such auxiliary indicator continuously detects (for an interval of 30-60 minutes for example) a value superior to such threshold (for example two times in three intervals), a signal of leak will be provided (and an alarm sent).

Equally, the consumption along the main duct 2, and in particular the maximum peak value, in addition to be used so that the unit 1 be used as an ordinary meter, can also be used to detect the presence of any breakage that would lead to excessive flow in the main duct 2. The main indicator, or another indicator, in fact can be constituted by the maximum flow measured: whenever there is a series of readings (three for example) that are superior to the reference parameter suitably chosen, it will be possible to send a signal of alarm due to excessive consumption (which would indicate a breakage along the pipes).

The first module and the possibility of calculations described above therefore allow the behavior of the flow to be analyzed and for any anomalies to be signaled promptly (by way of another component of the control and management unit): it should be noted that the possibility of obtaining measurements as often as desired allows for a punctual monitoring of the behavior of the ducts as well as of the unit 1. Even in correspondence to brief observation periods (1 day for example, or even a few hours), it is sufficient to take the measurements more frequently (even every minute) to obtain a statistically significant analysis of the fluid's behavior and of the unit 1 that is relative to the period of observation.

This allows in the first place the constant visioning of the consumption, as well as the early detection of leaks or other anomalies, that are not noticeable when using known measuring units, because of both the necessity to read the meters only at the end of the invoicing period (which is equal to one or two months, if not one year, as happens often) and the fact already observed that it is impossible to detect low flow-rates (which indicate leakage) with only one instrument dedicated to the reading of the consumption of the users that are connected to the water system under control.

Further, the possibility should not be excluded of using modules that are able to calculate different main indicators and/or auxiliary indicators, as long as required by the specific application needs. Moreover, control and management units may be used which have blocks able to calculate two different values for each of these, to then mutually compare them, and choose the most appropriate one compared with the reference parameter.

For example, according to a different application, at least one between the main indicator and the auxiliary indicator is constituted by the ratio between the root mean square and the average of the measurements performed consecutively during a predetermined interval of time. Even in this case, the value obtained can be compared to an appropriately chosen reference parameter determined according to the movement of a flow that is considered to be without anomalies.

Advantageously, the control and management unit comprises a second module for calculating at least one control parameter that is obtained by comparing the measurements obtained from the main flowmeter 3 and the measurements obtained from the auxiliary flowmeter 4, for diagnosing (daily for example) correct operation of the flowmeters.

In particular, according to a first embodiment, the control parameter is substantially constituted by the mean ratio between the flow-rate values detected by the main flowmeter 3 and the flow-rate values detected by the auxiliary flowmeter 4 (relative to the last N measurements, where N is fixes at will). For flow rate values comprised within the interval of overlap, as has already been seen, the two measuring instruments are both able to give an accurate reading and both are affected by the same flow: they must therefore, under optimal operating conditions, give a substantially identical reading and a ratio (control parameter) equal to one. The analysis of the control parameter thus allows for the early detection of any malfunctions of either the main flowmeter 3 or the auxiliary flowmeter 4, since if one of the two has undergone any type of breakage (a block of the rotor 7 for example), only the other one would give a reading different from zero and so the control parameter would have unusually high or low values.

The detection of such unusual control parameter values, in correspondence to the flow rates detected by only one operative instrument and comprised in the interval of overlap is thus a clear signal of the presence of breakage. Such breakage is thus identified promptly by the control and management unit (thanks to the frequent measurements taken) and allows for a timely intervention.

According to a different embodiment, the second module is suitable for the calculation of at least two other control parameters, that correspond substantially to the lower and upper limit of an actual range of overlap, determined like that in which the values reported by the main flowmeter 3 and the auxiliary flowmeter 4 coincide, minus a predetermined reading tolerance.

The lower limit of the actual range of overlap is thus found to be the maximum value read by the main flowmeter 3 that differs significantly (for example more than 5 %) by defect from the value read by the auxiliary flowmeter 4.

Analogously, the upper limit value of the actual range of overlap is given by the minimum value read by the auxiliary flowmeter 4 that differs significantly by defect from the value read by the main flowmeter 3.

Therefore, under optimal operating conditions, the range of overlap should coincide with the interval of overlap expected, whereas every mutation of the limits can be due to a malfunctioning of the measurement instruments and/or of the unit 1 according to the invention.

Further, embodiments that provide for the use of second modules able to calculate and elaborate all the types of control parameters described above (for a more complete check of the operation of the unit 1) are within the scope of the appended claims.

Obviously, the possibility of detecting early any malfunctions of the measurement instruments included within the unit 1 according to the invention is undoubtedly of interest for the companies that are responsible for water distribution that, with the units known, can only verify the presence of a breakage of the measurement instrument (which could have been existing for a long time) only after the final reading (in correspondence to an unusually low consumption of water), and such companies therefore cannot charge the users with the correct amount for the liters of water consumed.

According to a first solution of relevant practical interest, cited as a non-limitative example to illustrate one implementation of the invention, the control and management unit is substantially constituted by an electronic control unit that can be arranged in proximity to the main duct 2 and can be provided with means for telematic connection (even via the web) to a monitoring station that can even be located remotely.

The electronic control unit is able to elaborate the elementary data gathered by the main flowmeter 3 and the auxiliary flowmeter 4 locally and, on the basis of them, to formulate evaluations on the consumption trend and the operation of the components, as well as to control specific interventions to resolve anomalies that are judged to be unacceptable. The data and the evaluations can further be sent (at a programmed rate or upon request) to the monitoring station, as well as any alarm signals elaborated on the basis of the evaluations made.

In addition to the data relative to the instantaneous flow, the control unit is able to calculate and elaborate data and information relative to the consumption accumulated, to the presence of continuous small consumption (leaks), to the presence of unusually high consumption (breakage, to which it is able to react by halting the flow); finally, the control unit is given the task of analyzing the behavior of the main flowmeter 3 and of the auxiliary flowmeter 4 by comparing the relative flows, as described in the previous pages.

The monitoring station, that can be located at a surveillance station within the headquarters of the company responsible for the water distribution, is provided in turn with an interface for the visualization and analysis by the user of the data provided by such unit.

With such a solution, the unit 1 allows a user to keep the user's consumption constantly under control, even when there are an elevated number of users (systems managed by companies that are responsible for the water distribution for entire communities, cities or even metropolises may be considered). The consumption by such users, located downstream of the discharge section 2b of the main duct 2, will be monitored by inquiry of the control unit at a predetermined desired rate, or the control units will send data at a predetermined rate; further, the use of the unit 1 (for each connected user) will allow to receive prompt signals of any anomalies in the consumption (usually due to leaks) and of possible breakage of the main flowmeter 3 and/or the auxiliary flowmeter 4 (for any of the users).

According to an alternative embodiment, the measuring unit 1 according to the invention comprises a main transducer and an auxiliary transducer that are associated to the main flowmeter 3 and the auxiliary flowmeter 4. Moreover, the unit 1 comprises a device for transmitting signals in output from the main transducer and the auxiliary transducer to the monitoring station that can even be located remotely and in this case comprises the control and management unit, constituted for example by an electronic computer (thus able to perform the operations performed, in the previous embodiment, by the control unit). Further, the monitoring station comprises an interface for the visualization and the analysis, on the part of the user, of the data that arrive from such unit, in the same way as described for the previous embodiment.

Therefore, in both cases (cases that do not exhaust the embodiments possible while still being within the scope of the appended claims) the unit 1 allows for the constant monitoring (bimonthly or annually, when used as an ordinary meter, even with a telereading service, but also advantageously daily, hourly or even more often) of consumption and the behavior of the flow that transits the main duct 2 and/or the auxiliary duct 5.

Actually, the unit 1 according to the invention allows for the digitalizing of the information that is relative to the measurements of flow-rate and sending them telematically (even via the web) to control stations located in suitable places according to the specific needs. For example, the possibility of having such stations at the companies who are responsible for the water distribution has already been cited; such stations can also be located in the same buildings that constitute the users, as long as they are interested in constantly monitoring consumption. The possibility of managing information telematically and/or managing it via the web allows to take advantage of all the possibilities of analysis, calculation and detection of anomalies provided by the various electronic devices, with clear benefits for the user.

In addition, by means of the unit 1 according to the invention, it would be possible (while still within the scope of the appended claims) for the person in charge of the monitoring station to control the partialization of the user's consumption.

More in detail, the unit 1 can comprise an electric valve arranged along the main duct 2 that can be controlled remotely (therefore from the monitoring station, by way of the above described control unit and the relative means for the telematic connection for example) to occlude the main duct 2, thus preventing the circulation of the flow.

The activation of the electric valve thus allows to interrupt the supply of water to the users located downstream of the unit 1 (at the discretion of the person in charge), even when there are the correct conditions for the opening of the shutter 12 (or when the predetermined value of difference in pressure is exceeded), since the electric valve, carrying out the same functions as the shutter 12, is able to arrange itself in the configuration for blocking the circulation of the flow.

According to an alternative embodiment, the desired possibility of partialization according to the discretion of the person in charge, can be obtained using the shutter 12, provided with a stop that can be operated upon command (according to the procedures described above) to prevent the shift to the open configuration even when the predetermined value of difference in pressure has been reached between the intake section 2a and the discharge section 2b.

The embodiment described in the preceding paragraphs offers even further advantages: one of these is that the auxiliary duct 5, at the mouth of the end sections 5a that are directly connected to the main duct 2 (in proximity to the section that leads to the shutter 12), gets narrower at its annular passage section: this creates an automatic filtering of the particles that may be present in the water and therefore prevents any impurities of a considerable size (for example superior to 0.3 mm, in which case the meatus thus obtained would have a height of 300microns) to pass through the auxiliary duct 5 clogging it and/or damaging the auxiliary flowmeter 4.

The particles thus retained can then be removed definitively, when the predetermined value of difference in pressure is reached which causes the release of the valve from the passage port: in fact, as a consequence of such event, there is an intense flow of water through the main duct 2 that automatically allows for the cleaning of the main duct 2 and the removal of any residual particles or deposits along its walls 2c, as well as of the particles retained by the filter mentioned above.

In practice, it has been found that the unit according to the invention achieves the intended aims, since the choice to use a measuring unit comprising a main flowmeter, an auxiliary flowmeter, a flow control element and a control and management unit that acquires and elaborates, at a desired rate; the signals corresponding to the data gathered by the main flowmeter and such auxiliary flowmeter, guarantees a constant and correct measurement of the flow-rates that pass through the hydraulic ducts of interest.

The invention thus conceived is susceptible of numerous modifications and variations, all of which are within the scope of the appended claims; further, all the details may also be replaced with other technically equivalent elements.

In the exemplary embodiments described single characteristics, given in relation to specific examples, can be interchanged with other different characteristics that exist in other exemplary embodiments.

Moreover, it is noted that anything found to be already known during the patenting process is understood not to be claimed and to be the subject of a disclaimer.

In practice, the materials employed, as well as the dimensions, may be any according to requirements and to the state of the art.

Where technical features mentioned in the claims are followed by reference numbers and/or signs, those reference numbers and/or signs have been included for the sole purpose of increasing intelligibility of the claims and accordingly, such reference numbers and/or signs do not have any effect on the interpretation of each element identified by way of example by such reference numbers and/or signs.

## Claims

1. A measurement unit, particularly for hydraulic ducts, comprising at least one main duct (2) which has at least one intake section (2a) and at least one discharge section (2b) for a fluid, **characterized in that** it comprises:
― at least one main flowmeter (3), for measuring along said main duct. (2) the value of the flow-rate within a first measurement range;
― at least one auxiliary flowmeter (4), for measuring along an auxiliary duct (5) the value of the flow-rate within a second measurement range;
― at least one flow control element (6), which is arranged along said main duct (2) and can be operated selectively to divert the flow from said main duct (2) to said auxiliary duct (5), which is arranged in parallel to said flow control element (6);
― at least one control and management unit, which is functionally associated with said main flowmeter (3) and with said auxiliary flowmeter (4), for the acquisition and processing, at a rate chosen at will, of the signal that corresponds to the detections of said main flowmeter (3) and of said auxiliary flowmeter (4).

2. The measurement unit according to claim 1, characterized in that' said main flowmeter (3) comprises a rotor (7) which can rotate about a rotation axis which is arranged along the direction of the flow of the fluid, the number of turns of the rotor (7) in the unit time being correlated directly to the flow-rate of the fluid that circulates in said main duct (2) and being detectable by a sensor (8) arranged in the vicinity of said rotor (7).

3. The measurement unit according to claim 2, **characterized in that** said sensor (8) is a proximity sensor of the inductive type for detecting, through a predefined measurement region, the passes of at least one magnet (9) arranged at an end portion of at least one vane (10) of said rotor (7), the passes corresponding to the number of turns of said rotor (7).

4. The measurement unit according to one or more of the preceding claims, **characterized in that** said main flowmeter (3) comprises an outer ring (11), which is rigidly coupled to the free ends of said vanes (10) of said rotor (7), said outer ring (11) having radial dimensions which are substantially complementary to those of said main duct (2), in order to ensure that the alignment of said rotor (7) with respect to said main duct (2) is maintained during rotation and for the shape stability of said vanes (10).

5. The measurement unit according to claim 1, **characterized in that** said second measurement range of said auxiliary flowmeter (4) is sized for flow-rate readings which are substantially smaller than those of said main flowmeter (3), despite having an interval of overlap with said first measurement range, the flow-rate values that fall within said overlap interval being detectable both by said main flowmeter (3) and by said auxiliary flowmeter (4), which is arranged substantially in series, when said flow control element (6) is actuated, with respect to the portion of said main duct (2) that comprises said main flowmeter (3).

6. The measurement unit according to claim 1, **characterized in that** said flow control element (6) is constituted substantially by a valve which comprises a shutter (12) which is normally arranged to close a passage port formed along said main duct (2), said shutter (12) being movable automatically to disengage said port when a predefined value of difference in pressure between said intake section (2a) and said discharge section (2b) is exceeded, and vice versa.

7. The measurement unit according to claim 1, **characterized in that** said control and management unit comprises at least one first module for calculating a main indicator and/or an auxiliary indicator, which represent the behavior over time of the flow that circulates respectively in said main duct (2) and in said auxiliary duct (5).

8. The measurement unit according to claim 7, **characterized in that** said control and management unit comprises a comparator for comparing the main indicator and/or the auxiliary indicator with a respective preset reference parameter for prompt detection of anomalies and deviations with respect to the normal behavior of the flows that circulate in said main duct (2) and in said auxiliary duct (5).

9. The measurement unit according to claim 8, **characterized in that** said auxiliary indicator is constituted by the minimum flow-rate value detected by said auxiliary flowmeter (4) along said auxiliary duct (5), said auxiliary indicator being comparable, over time, with a reference parameter which in turn is constituted by a predefined loss threshold.

10. The measurement unit according to claim 7, **characterized in that** said main indicator and/or said auxiliary indicator is constituted by the ratio between the root mean square and the average of the measurements performed consecutively in a predefined time interval.

11. The measurement unit according to claim 1, **characterized in that** said control and management unit comprises a second module for calculating at least one control parameter, which is obtained by comparing the measurements obtained from said main flowmeter (3) and the measurements obtained with said auxiliary flowmeter (4), for diagnosing the correct operation of said flowmeters.

12. The measurement unit according to claim 11, **characterized in that** said control parameter is constituted substantially by the mean ratio between the flow-rate values detected by said main flowmeter (3) and the flow-rate values detected by said auxiliary flowmeter (4), at said overlap interval the analysis of said control parameter allowing prompt identification of any malfunctions of said main flowmeter (3) and/or said auxiliary flowmeter (4).

13. The measurement unit according to claim 11, **characterized in that** said second module is adapted to calculate at least two control parameters, which correspond substantially to the lower and upper limit of an actual overlap range, in which the values reported by said main flowmeter (3) and by said auxiliary flowmeter (4) coincide, minus a predefined reading tolerance.

14. The measurement unit according to claim 1, **characterized in that**.
said control and management unit is constituted substantially by an electronic control unit, which can be arranged proximate to said main duct (2) and is provided with means for telematic connection to a monitoring station, which may also be located remotely and in turn is provided with an interface for viewing and analysis, on the part of a user, of the data that arrive from said unit.

15. The measurement unit according to claim 1 and as an alternative to claim 14, **characterized in that** it comprises a main transducer and an auxiliary transducer, which are associated with said main flowmeter (3) and with said auxiliary flowmeter (4), and **in that** it comprises a device for transmitting signals in output from said main transducer and from said auxiliary transducer to a monitoring station, which may also be located remotely and comprises said control and management unit, constituted by an electronic computer, and an interface for viewing and analysis, on the part of a user, of the data that arrive from said unit.
